# EUROPEAN PATENT APPLICATION

(11) **EP 1 930 798 A2**
(43) Date of publication of application: **11.06.2008**
(21) Application number: 06024792.1
(22) Date of filing: 30.11.2006
(51) Int. Cl.: G05D 23/13

(54) **Flow control device**

(71) Applicant: Squire, Trevor James, Momington VIC 3931 (AU)
(72) Inventor: Squire, Trevor James, Momington VIC 3931 (AU)
(74) Representative: Biehl, Christian

(57) **Abstract**

A valve assembly for a hot water service in a building joins a thermostatic valve 30 to a diaphragm valve 38. This assembly diverts water from a domestic water heater which is cold or only warm and ensures hot flow without running water to waste. The assembly has a leg 14 which bypasses water at mains pressure for collection..or garden use.. The assembly is modified by joining the assembly in series with a tempering valve 44 which admits cold water flow to reduce the hot water temperature from 50°C-60°C to 44°C.

## Description

### FIELD OF THE INVENTION

This invention concerns devices for delivering a liquid stream at a predetermined temperature. The invention will be described with particular reference to supplying hot water facilities in buildings and saving water in dwellings which have a hot water service.

### BACKGROUND OF THE INVENTION

Persons who wait for hot water to arrive at a tap or showerhead normally run the initial cold water to waste. As much as 10% of each service cycle can be wasted in this way. In larger homes, the distance to the water heater is longer. In older houses the pipework insulation may be absent or inferior. Modem in-line continuous flow gas water heaters have a time delay before achieving target temperature. All lead to increased water loss. In winter the problem is exacerbated.

The bypass may direct cold water to a collector at the same water pressure as the supply pressure. In gas or other water heating installations this will be mains pressure, namely greater than 400kPa. Such a feed pressure will send water a useful distance in an urban setting, for example a pool, a garden watering system, or storage tank. On rural properties the supply pressure will not have mains pressure but pump pressure or pressure created by a gravity feed header tank. The cold outlet may therefore return water to the storage tank for re-use.

Devices have been proposed to bypass the cold water but they either require an electrical voltage powered device or they reduce the pressure of the saved water so that possibilities for its re-use are downgraded.

WO2004088051 describes a water recovery system in which bypass water is diverted by a valve assembly until it is sufficiently hot and a venturi situated between the mains inlet and the mains outlet "sucks in" bypassed water from a storage tank and returns it to the system.

The aim of this invention is not to capture bypass water, but to make it available for use rather than running it to waste.

### SUMMARY OF THE INVENTION

A valve assembly comprising
(a) a thermostatic valve having a hot inlet and hot outlet and a bypass outlet for water which is not hot enough to gain passage between the hot inlet and the hot outlet,
(b) a separate diaphragm valve in series in the bypass outlet, wherein the valve closes the bypass in response to an increase in pressure at the hot water outlet.

The thermostatic valve may be a wax element tempering valve connected for reverse operation. The diaphragm valve may be connected by capillary conduit to the hot outlet.

In this valve assembly the inlet/outlet connections of the assembly may be substantially aligned and all point in the same direction.

The hot inlet of the assembly may be connected to the hot inlet of a basin and the hot outlet may be connected to conduits which service other hot water outlets in the vicinity including the hot tap supplying the basin while the bypass water is collected. Accordingly the assembly may be fitted in the basin cabinet and plumbed into the other outlets in the bathroom such as the shower or bath. It may also be placed in any location adjacent to the multiple outlets to be supplied.

In a preferred embodiment, the hot outlet of the assembly is connected to the hot inlet of a tempering valve which has a cold inlet for cooling the hot flow and an outlet for tempered flow. The tempering valve may be adjustable to deliver tempered flow at 44°C. Placing the assembly in a basin cabinet allows access for repair and adjustment.

While a variety of hydraulic diaphragm valves are obtainable, we have tested a number of ½" and ¾" sizes and found that their response to a rise in pressure following the ordinary closing of a hot water outlet in the system effectively closes the bypass. As long as the elevation in pressure prevails, the diaphragm remains closed and "hunting" is eliminated. If the system has a domestic water supply where a long life is expected it is useful to select a diaphragm valve with a diaphragm of high grade rubber; butyl rubber or polyurethane in order to discourage water borne bacteria from trying to metabolise the diaphragm.

### BRIEF DESCRIPTION OF THE DRAWINGS

One embodiment of the invention is now described with reference to the accompanying drawings, in which:
- Figure 1: is a diagram of a domestic hot water service showing the bypass component.
- Figure 2: is a plan view of the bypass component.
- Figure 3: is a flow diagram of the bypass component.
- Figure 4: is a diagram of the bypass component in series with a tempering valve to achieve both water saving and a target temperature which meets regulations.
- Figure 5: is a diagram of the bypass component in series with a tempering valve to achieve both water saving and a target temperature which meets regulations.
- Figure 6: is a diagram of a domestic hot water service showing the bypass component and temperature control system.

### DETAILED DESCRIPTION WITH RESPECT TO THE DRAWINGS

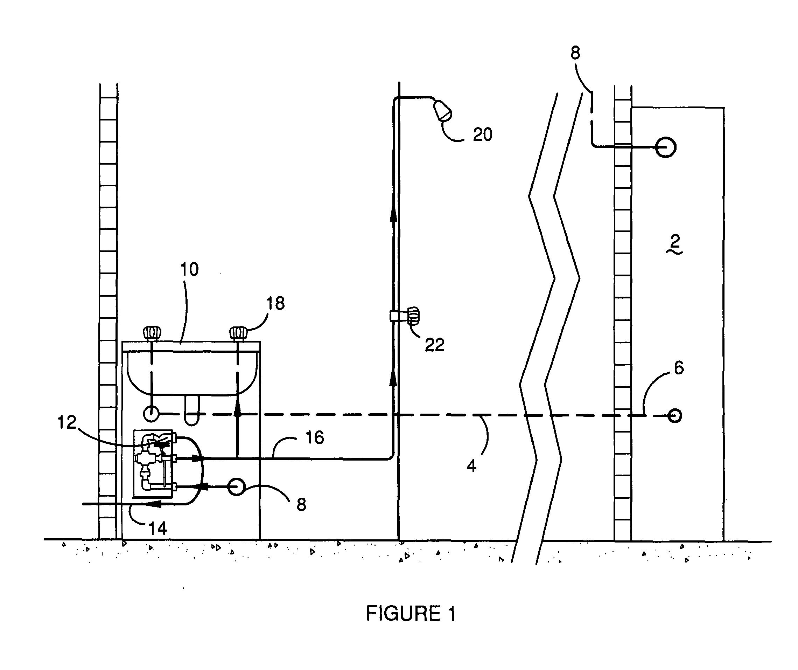

Referring now to Figure 1, gas/electric/oil/wood/other heater 2 receives a cold water supply 4 at mains pressure and through the wall via pipe 6. Hot water main 8 travels across the dwelling to washbasin 12. Hot main 8 supplies bypass component 12. Bypassed cold water leaves component 12 through pipe 14 which joins a drip irrigation system or other (not shown). Hot outlet 16 serves basin tap 18 and shower 20. Screw valve 22 in the shower controls shower flow in known manner.

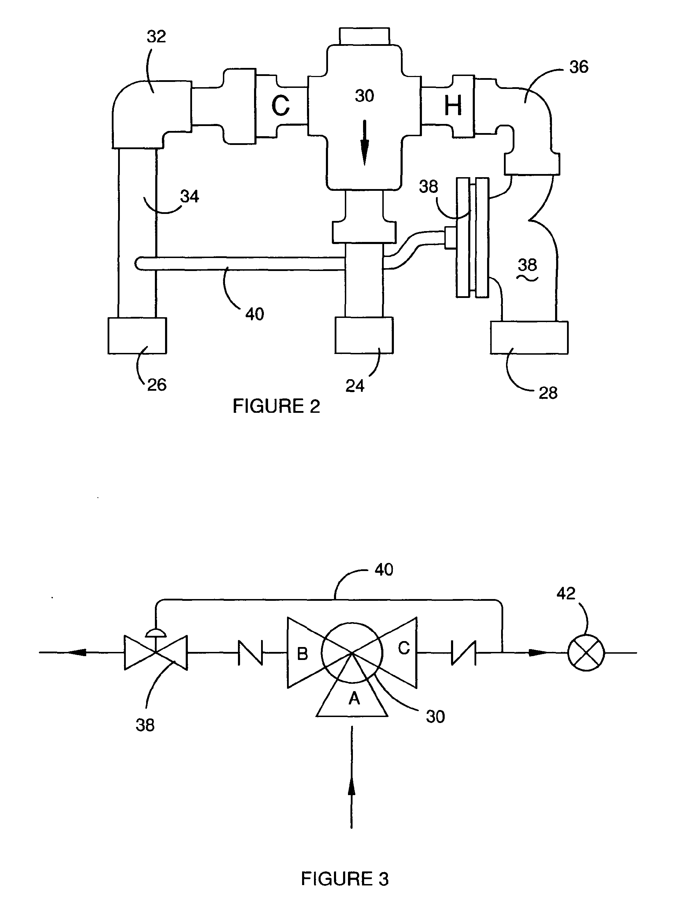

Referring now to Figure 2, component 12 has three unions 24, 26, 28. Union 24 admits hot water from hot water main 8 to the outlet of a thermostatic valve 30 against the flow direction marked with the arrow. The valve contains a wax element and is a standard plumbing component. The COLD side marked "C" is connected to a bend 32 and a stub 34 which ends in union 26.

The HOT side marked "H" is connected via bend 36 to diaphragm valve 38 which is also a standard plumbing component. One side of the diaphragm is connected by capillary tube 40 to stub 34. The cold bypass water leaves union 28. to join pipe 14.

Referring now to Figure 3, when the user opens valve 42, water from the heater issues at varying temperature and pressure. If the wax element is not thermally activated, water enters at port A and leaves via port B to bypass. C is adjusted to open above a target temperature. As the arriving water rises in temperature, the wax element closes port B and opens port C. When valve 42 closes, pressure rises at port C via the capillary tube and the diaphragm valve closes and remains closed until valve 42 reopens.

Whereas water heaters deliver water at the temperature set by the householder which may vary between 40°C and 80°C, regulation stipulates that the approved temperature should not exceed 50°C. This will not harm a person's skin but is hot enough for domestic tasks such as cleaning and laundry. This temperature however is generally too hot to shower under, therefore our target temperature is 44°C which is a safe and comfortable temperature.

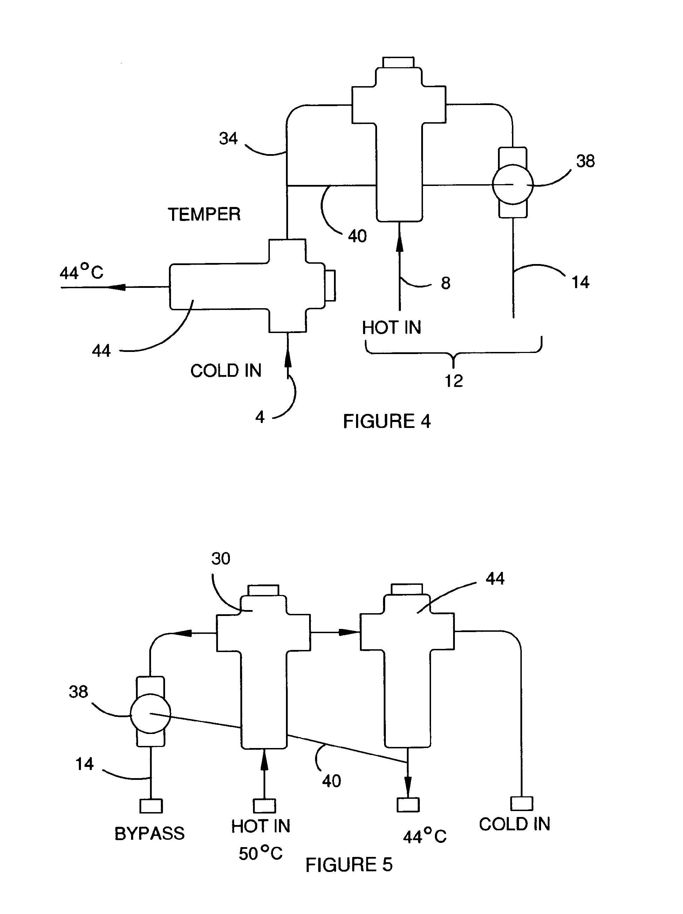

In Figure 4, an assembly is shown which uses mains hot and cold water and bypasses water during the warm up period. Thus the assembly is intended to deliver hot water at a uniform temperature. To this end the bypass component 12 receives flow at 50°C or greater from hot main 8. Cold and warm water leave the assembly through bypass 14. Hot water leaves component 12 through stub 34 and enters tempering valve 44. Cold main 4 supplies sufficient flow to reduce the temperature by a few degrees. The hot flow is delivered by tempering valve 44 at 44°C. In Figure 4 the tempering valve is connected to hot and cold flows the conventional way round.

Figure 5 shows an alternative configuration to the Figure 4 assembly. The thermostatic valve 30 and diaphragm valve are arranged as in Figure 4 but there are four unions.

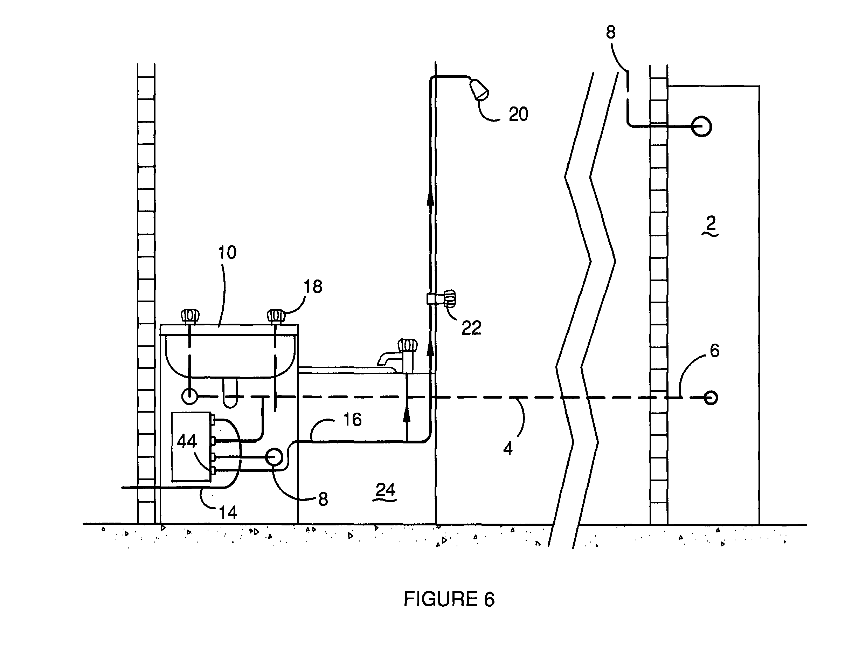

Referring now to Figure 6, gas/electric/oil/wood/other heater 2 receives a cold water supply 4 at mains pressure and through the wall via pipe 6. Hot water main 8 travels across the dwelling to washbasin 10. Hot main 8 supplies bypass component 12. Bypassed cold water leaves component 12 through pipe 14 which joins a drip irrigation system or other (not shown). Cold water from main 6 enters temperature control module 44 where it is mixed with hot water from 12 which is delivered to pipe 16 at target temperature of 44°C approximately to serve basin 18, shower 22 and bath 24 via screw valves to control water flow in known manner.

I have found the advantages of the above embodiment to be:
1. The assembly utilises components of already proven reliability.
2. The use of separate thermostatic and hydraulic valves cheapens replacement and repair.
3. The tempered supply is adjustable to deliver hot water at 44 C.
4. The bypassed water is available at mains pressure.
5. Is suitable for use with all types of tapware.
6. No external power source is required.
7. No sound.
8. Suitable for use with non-storage type water heaters (ie. gas continuous flow).

It is to be understood that the word "comprising" as used throughout the specification is to be interpreted in its inclusive form, ie. use of the word "comprising" does not exclude the addition of other elements.

It is to be understood that various modifications of and/or additions to the invention can be made without departing from the basic nature of the invention. These modifications and/or additions are therefore considered to fall within the scope of the invention.

## Claims

1. A valve assembly comprising a thermostatic valve having a hot inlet and hot outlet and a normally open bypass outlet for water which is not hot enough to gain passage between the hot inlet and the hot outlet, **characterised by** a separate diaphragm valve connected in series in the bypass outlet, wherein the diaphragm valve closes the bypass in response to an increase in pressure at the hot water outlet.

2. A valve assembly as claimed in Claim 1, **characterised in that** the thermostatic valve is a wax element tempering valve connected for reverse operation.

3. A valve assembly as claimed in Claim 1 or 2, **characterised in that** the diaphragm valve is connected by capillary conduit to the hot outlet.

4. A valve assembly as claimed in any one of Claims 1-3, **characterised in that** the inlet and outlet and bypass terminate in pipe connectors which are substantially aligned.

5. A valve assembly as claimed in Claim 4, **characterised in that** the connectors all point in the same direction.

6. A valve assembly as claimed in any one of Claims 1-5, **characterised in that** the thermostatic valve is connected in series to a tempering valve having a hot inlet, a cold inlet and a mixed outlet for tempered flow, the hot outlet of the thermostatic valve being connected to the hot inlet of the tempering valve.

7. A valve assembly as claimed in Claim 5, **characterised in that** the tempering valve is adjustable to deliver tempered flow at 44°C.

8. A hot water service comprising a basin served by a hot water supply and a valve assembly in turn comprising:
(a) a thermostatic valve having a hot inlet for water from the hot water supply,
(b) a hot outlet directing water to the basin, and
(c) a normally open bypass for water which is not hot enough to gain passage between the hot inlet and hot outlet,
**characterised by** a separate diaphragm valve connected in series in the bypass outlet, wherein the valve closes the bypass in response to an increase in pressure at the hot water outlet.

9. A hot water service as claimed in Claim 8, **characterised in that** the hot outlet directs hot water to another hot water outlet in the vicinity.

10. A hot water service as claimed in Claim 9, **characterised in that** the hot water outlets in the vicinity serve a shower and a bath.
